(19)

Europäisches
Patentamt
European
Patent Office
Office européen
des brevets

(11) **EP 3 644 612 A1**

(12) **EUROPEAN PATENT APPLICATION**

(43) Date of publication:
**29.04.2020 Bulletin 2020/18**

(21) Application number: **18306384.1**

(22) Date of filing: **23.10.2018**

(51) Int Cl.:
**H04N 19/593** *(2014.01)*      **H04N 19/105** *(2014.01)*
**H04N 19/11** *(2014.01)*       **H04N 19/167** *(2014.01)*
**H04N 19/176** *(2014.01)*

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **InterDigital VC Holdings, Inc.
Wilmington, DE 19809 (US)**

(72) Inventors:
 • **RACAPE, Fabien**
  **35576 Cesson-Sévigné Cedex (FR)**
 • **RATH, Gagan**
  **35576 Cesson-Sévigné Cedex (FR)**
 • **URBAN, Fabrice**
  **35576 Cesson-Sévigné Cedex (FR)**

(74) Representative: **Huchet, Anne
 InterDigital CE Patent Holdings
 20, rue Rouget de Lisle
 92130 Issy-les-Moulineaux (FR)**

(54) **METHOD AND DEVICE FOR PICTURE ENCODING AND DECODING**

(57)    A decoding method is disclosed. A current block is first intra predicted to obtain a prediction block. The current block is then decoded using the prediction block. At least one sample of the prediction block is obtained by a linear combination of reference samples, wherein one reference sample is padded. In this case, a weight associated with the padded reference sample decreases as a function of a distance between the padded reference sample and a last available reference sample.

Figure 8B

**Description**

1. TECHNICAL FIELD

At least one of the present embodiments generally relate to a method and a device for picture encoding and decoding, and more particularly, to a method and a device for picture encoding and decoding using intra prediction.

2. BACKGROUND ART

To achieve high compression efficiency, image and video coding schemes usually employ prediction and transform to leverage spatial and temporal redundancy in the video content. Generally, intra or inter prediction is used to exploit the intra or inter frame correlation, then the differences between the original image block and the predicted image block, often denoted as prediction errors, prediction residuals or predictor, are transformed, quantized and entropy coded. During encoding the original image block is usually partitioned/split into sub-blocks possibly using quad-tree partitioning. To reconstruct the video, the compressed data is decoded by inverse processes corresponding to the prediction, transform, quantization and entropy coding.

3. BRIEF SUMMARY

According to a general aspect of at least one embodiment, a decoding method is presented that comprises:

- intra predicting a current block to obtain a prediction block;
- decoding the current block using the prediction block;
  wherein at least one sample of the prediction block is obtained by a linear combination of reference samples, one reference sample being padded, wherein a weight associated with the padded reference sample decreases as a function of a distance between the padded reference sample and a last available reference sample.

According to another general aspect of at least one embodiment, an encoding method is presented that comprises:

- intra predicting a current block to obtain a prediction block;
- encoding the current block using the prediction block;

wherein at least one sample of the prediction block is obtained by a linear combination of reference samples, one reference sample being padded, wherein a weight associated with the padded reference sample decreases as a function of a distance between the padded reference sample and a last available reference sample.

According to another general aspect of at least one embodiment, an apparatus is presented that comprises one or more processors configured to perform:

intra predicting a current block to obtain a prediction block;
decoding the current block using the prediction block;
wherein at least one sample of the prediction block is obtained by a linear combination of reference samples, one reference sample being padded, wherein a weight associated with the padded reference sample decreases as a function of a distance between the padded reference sample and a last available reference sample.

According to another general aspect of at least one embodiment, an apparatus is presented that comprises one or more processors configured to perform:
encoding the current block using the prediction block;
wherein at least one sample of the prediction block is obtained by a linear combination of reference samples, one reference sample being padded, wherein a weight associated with the padded reference sample decreases as a function of a distance between the padded reference sample and a last available reference sample.

One or more of the present embodiments also provide a computer readable storage medium having stored thereon instructions for encoding or decoding video data according to at least part of any of the methods described above. One or more embodiments also provide a computer readable storage medium having stored thereon a bitstream generated according to the encoding methods described above. One or more embodiments also provide a method and apparatus for transmitting or receiving the bitstream generated according to the encoding methods described above. One or more embodiments also provide a computer program product including instructions for performing at least part of any of the methods described above.

## 4. BRIEF SUMMARY OF THE DRAWINGS

Figure 1 depicts examples of binary and triple tree split modes;

Figure 2 depicts a Coding Tree Block (CTB) split into Coding Blocks (CBs) according to various split modes, e.g. binary and triple tree split modes;

Figure 3 illustrates the sample reference generation process from neighboring reference samples;

Figure 4 represents various prediction directions as used in intra prediction;

Figure 5 represents reference samples as used by the Position Dependent intra Prediction Combination (PDPC) for various angular intra prediction modes;

Figures 6 and 7 depict a block to be intra predicted for which some of the reference pixels which are unavailable are padded;

Figure 8A illustrates the process of marking the last available sample according to an embodiment;

Figure 8B depicts a flowchart of a decoding method according to an embodiment;

Figure 8C depicts a flowchart of an encoding method according to an embodiment;

Figure 9 depicts a flowchart of a prediction method according to an embodiment;

Figure 10 depicts a flowchart of a prediction method that uses PDPC according to one embodiment;

Figure 11 illustrates a prediction method that uses inverse direction to predict samples according to one embodiment;

Figure 12 illustrates a prediction method that used a linear combination of inverse prediction and conventional prediction according to one embodiment;

Figure 14 illustrates a block diagram of a video encoder according to an embodiment;

Figure 15 illustrates a block diagram of a video decoder according to an embodiment; and

Figure 16 illustrates a block diagram of an example of a system in which various aspects and embodiments are implemented.

## 5. DETAILED DESCRIPTION

In HEVC coding, a picture is partitioned into CTUs of square shape with a configurable size typically 64x64. The size may be 128x128, or 256x256 in other video coding standards. A CTU is the root of a quad-tree partitioning into 4 square Coding Units (CU) of equal size, i.e. half of the parent block size in width and in height. A quad-tree is a tree in which a parent node can be split into four child nodes, each of which may become parent node for another split into four child nodes. In HEVC, a coding Block (CB) is partitioned into one or more Prediction Blocks (PB) and forms the root of a quadtree partitioning into Transform Blocks (TBs). Corresponding to the Coding Block, Prediction Block and Transform Block, a Coding Unit (CU) includes the Prediction Units (PUs) and the tree-structured set of Transform Units (TUs), a PU includes the prediction information for all color components, and a TU includes residual coding syntax structure for each color component. The size of a CB, PB and TB of the luma component applies to the corresponding CU, PU and TU.

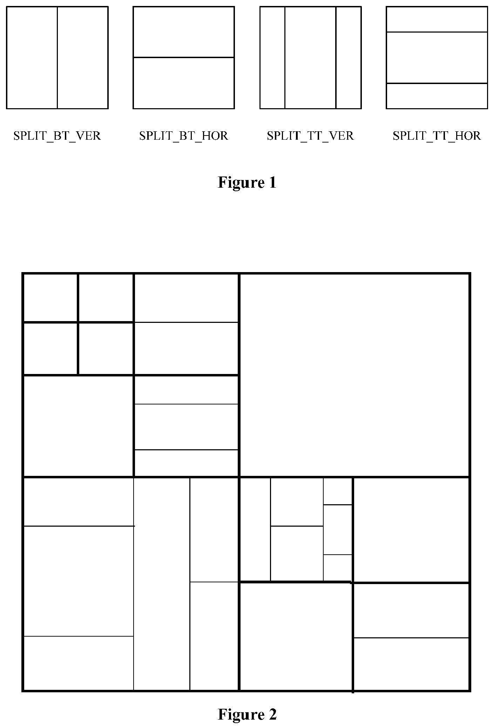

In more recent encoding systems, a CTU is the root of a coding tree partitioning into Coding Units (CU). A coding tree is a tree in which a parent node (usually corresponding to a block) can be split into child nodes (e.g. into 2, 3 or 4 child nodes), each of which may become parent node for another split into child nodes. In addition to the quad-tree split mode, new split modes (binary tree symmetric split modes, binary tree asymmetric split modes and triple tree split modes) are also defined that increase the total number of possible split modes. **Figure 1** depicts examples of such split modes. The two split modes on the left are classical binary split mode that split a block into two identical sub-blocks either vertically (SPLIT_BT_VER) or horizontally (SPLIT_BT_HOR). The two split modes on the right are examples of triple tree split modes. The SPLIT_TT_VER mode splits a block into three sub-blocks vertically of respective widths N/4, N/2 and N/4. The SPLIT_TT_HOR mode splits a block into three sub-blocks horizontally of respective heights N/4, N/2 and N/4. The coding tree has a unique root node, e.g. a CTU. A leaf of the coding tree is a terminating node of the tree. Each node of the coding tree represents a block that may be further split into smaller blocks also named sub-blocks or more generally sub-blocks. Once the partitioning of a CTU into CUs is determined, CUs corresponding to the leaves of the coding tree are encoded. The partitioning of a CTU into CUs and the coding parameters used for encoding each CU (corresponding to a leaf of the coding tree) may be determined on the encoder side through a rate distortion optimization procedure. **Figure 2** depicts a CTU split into CUs according to various split modes. More precisely, it represents a coding tree of a CU with nested Quad Tree (QT), Binary Tree (BT) and Triple Tree (TT) structures.

In the present application, the term "block" or "picture block" can be used to refer to any one of a CTU, a CU, a PU, a TU, a CB, a PB and a TB. In addition, the term "block" or "picture block" can be used to refer to a macroblock, a partition and a sub-block as specified in H.264/AVC or in other video coding standards, and more generally to refer to an array of samples of numerous sizes.

In the present application, the terms "reconstructed" and "decoded" may be used interchangeably, the terms "pixel" and "sample" may be used interchangeably, the terms "image," "picture" and "frame" may be used interchangeably. Usually, but not necessarily, the term "reconstructed" is used at the encoder side while "decoded" is used at the decoder side.

Intra prediction in video compression refers to the spatial prediction of a block of pixels using the information from the causal neighbor blocks, that is, the neighboring blocks in the same frame which have already been decoded. This is a powerful coding tool since it allows for high compression efficiency in INTRA frames, as well as in INTER frames whenever there is no better temporal prediction. Therefore, intra prediction has been included as a core coding tool in all video compression standards including H.264/AVC, HEVC, etc.

Intra prediction exploits the spatial correlation among the pixels which may belong to the same object, background or region, etc. In this context, the intra prediction in video coding standards such as H.264/AVC, H.265/HEVC, etc., has been designed to capture directionalities of object orientations and the slow changing intensity of regions or textures. In HEVC, for example, the intra prediction includes 35 prediction modes which include one DC, one PLANAR, and 33 angular prediction modes. The angular modes are designed to model the directional structures of objects whereas the DC and the planar modes provide predictions for regions with slow and gradual intensity change, and also for regions with varying textures. In the Versatile Video Coding Test Model (VTM), which aims at designing the future standard H.266, the number of prediction modes has been increased to 67 to accommodate further directions especially useful for big block sizes. In the case of directional prediction modes, the filtered pixel values from neighboring left and top neighbors are repeated in predefined directions. To smooth the prediction along block boundaries, Position Dependent intra Prediction Combination (PDPC) has been introduced. It aims at smoothing the prediction at the target block boundary using an additional reference sample. For some prediction directions, some of the reference samples are not available, and hence padding of references samples is used.

In HEVC, encoding of a frame of video sequence is based on a quad-tree (QT) block structure. A frame is divided into square coding tree units (CTUs) which all undergo quad-tree based splitting to multiple coding units (CUs) based on rate-distortion criteria. Each CU contains at least one prediction unit (PU), which are the basis blocks for prediction tools. In Intra prediction, a PU is spatially predicted from the causal neighbor PUs, i.e., the PUs on the top and the left. For that purpose, HEVC uses simple spatial models called prediction modes. Based on the decoded pixel values in the top and left PUs, called reference pixels, the encoder constructs different predictions for the target block and chooses the one that leads to the best RD performance. Out of the 35 defined modes, one is a planar mode (indexed as mode 0), one is a DC mode (indexed as mode 1) and the remaining 33 (indexed as mode 2-34) are angular modes. The angular modes aim to model the directional structures of objects in a frame. Therefore, the decoded pixel values in the top and left CUs are simply repeated along the defined directions to fill up the prediction block. Since this process can lead to discontinuities along the top and left reference boundaries for certain modes, those prediction modes include a subsequent post-filtering to smooth the pixel values along those boundaries.

The above prediction models work very well as long as the intensity values do not change too much. However, in natural imagery, the intensity values on objects often undergo changes due to several reasons. Either as a color property of the object itself, or because of lighting, depth, motion, etc., the intensity values over a PU can undergo changes which cannot be sufficiently modelled using pixel repetition. This is especially true when the PU size is large. In VTM, it has been proposed to use CTU sizes up to 128. Therefore, it is more meaningful to consider other prediction models such as interpolation which will model the intensity change much more efficiently.

### Intra prediction in HEVC

The intra prediction process in HEVC comprises three steps: (1) reference sample generation (2) intra sample prediction and (3) post-processing of predicted samples.

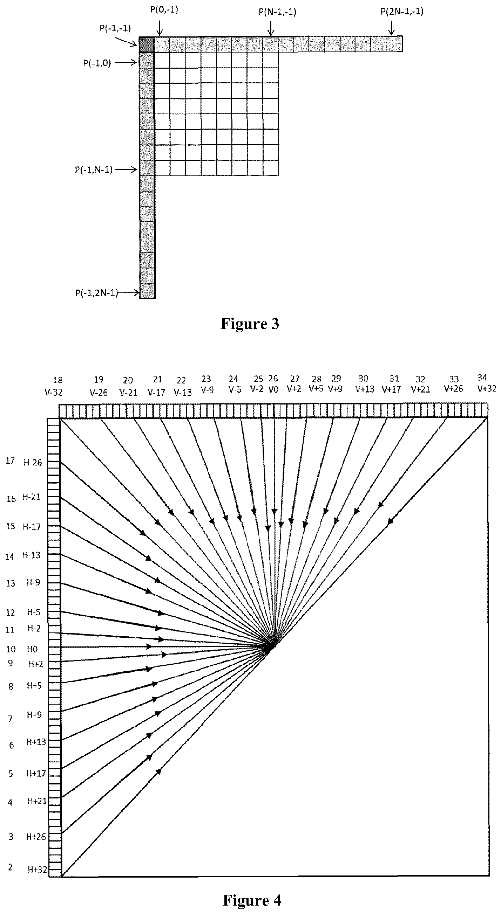

The reference sample generation process is illustrated in **Figure 3.** For a PU of size NxN, a row of 2N decoded samples on the top is formed from the previously reconstructed top and top right pixels to the current PU. Similarly, a column of 2N samples on the left is formed from the reconstructed left and below left pixels. The corner pixel at the top-left position is also used to fill up the gap between the top row and the left column references. If some of the samples on top or left are not available, e.g. because of the corresponding CUs not being in the same slice, or the current CU being at a frame boundary, then a method called reference sample substitution is performed where the missing samples are copied from the available samples in a clockwise direction. Then, depending on the current CU size and the prediction mode, the reference samples are filtered using a specified filter.

The next step, i.e., the intra sample prediction, consists of predicting the pixels of the target CU based on the reference samples. As mentioned before, in order to predict different kinds of content efficiently, HEVC supports a range of prediction models. Planar and DC prediction modes are used to predict smooth and gradually changing regions, whereas angular prediction modes are used to capture different directional structures. HEVC supports 33 directional prediction modes which are indexed from 2 to 34. These prediction modes correspond to different prediction directions as illustrated in **Figure 4.**

As shown in Figure 4, the defined angular directions result in a sample accuracy of 1/32. That is, between any two adjacent reference samples, there are 32 possible directions. The defined directions can be distinguished as either vertical or horizontal. The predictions in horizontal directions use either only left reference samples or some left and some top reference samples. Similarly, the predictions in vertical directions use either only top reference samples or some top and some left reference samples. The directions which use only left reference samples or only the top reference samples are defined to be positive directions. Thus, we have horizontal positive directions from H0 to H+32 that use only the left reference samples. Similarly, we have vertical positive directions from V0 to V+32 that use only the top reference samples. Other horizontal and vertical directions (H-2 to H-26 and V-2 to V-32) are defined to be negative directions and they use reference samples both on the left and on the top. The table below shows the relationship between the prediction mode and the angle parameter A as specified by HEVC:

*Table 1 Mapping of mode index to angle parameter A*

| Horizontal directions | | | | | | | | | | | | | | | | |
|---|---|---|---|---|---|---|---|---|---|---|---|---|---|---|---|---|
| Mode index | 2 | 3 | 4 | 5 | 6 | 7 | 8 | 9 | 10 | 11 | 12 | 13 | 14 | 15 | 16 | 17 |
| A | 32 | 26 | 21 | 17 | 13 | 9 | 5 | 2 | 0 | -2 | -5 | -9 | -13 | -17 | -21 | -26 |

| Vertical directions | | | | | | | | | | | | | | | | |
|---|---|---|---|---|---|---|---|---|---|---|---|---|---|---|---|---|
| Mode index | 18 | 19 | 20 | 21 | 22 | 23 | 24 | 25 | 26 | 27 | 28 | 29 | 30 | 31 | 32 | 33 | 34 |
| A | -32 | -26 | -21 | -17 | -13 | -9 | -5 | -2 | 0 | 2 | 5 | 9 | 13 | 17 | 21 | 26 | 32 |

In HEVC reference software, a reference array is first constructed using the top and left reference samples. For vertical predictions, the reference array is horizontal and for horizontal predictions, the reference array is vertical. For the modes with positive angle parameter A (modes 2 to 10 and 26 to 34), the reference array is simply the top reference sample *topRef*[] or left reference sample *leftRef*[] depending on the direction:

$$topRef[x] = P[x - 1][-1], 0 \leq x \leq 2N, \text{ for vertical predictions}$$

$$leftRef[y] = P[-1][y - 1], 0 \leq y \leq 2N, \text{ for horizontal predictions}$$

where N is the CU size and P[x][y] are the reconstructed samples of the neighboring CUs as depicted on Figure 3. It is conventional to initialize the sample coordinates to (0,0) at the top-left pixel of the target CU. Therefore, the top reference samples will have their y-coordinate as -1 and the left reference samples will have their x-coordinate as -1.

For the modes with negative angle parameter A (modes 11 to 25), the reference array needs pixels from both the top and left reference. In this case, the reference array will extend to the negative indices beyond 0. Sample values on the reference array with positive indices are obtained as above depending on vertical or horizontal prediction. Those on the reference array with negative indices are obtained by projecting the left (for vertical predictions) or top reference pixels (for horizontal predictions) on the reference array along the prediction direction.

Once the reference array is constructed, the prediction sample value Pred[x] [y] at any pixel position (*x,y*) inside the target CU is obtained by first projecting the pixel position (*x,y*) to the reference array along the selected direction to obtain the reference array position indices i (integer index) and f (fractional index). The prediction sample value *Pred*[x][y] is then computed at a sample resolution of (1/32) by interpolating between two adjacent reference samples as illustrated below:

$$Pred[x][y] = ((32 - f) * topRef[x + i + 1] + f * topRef[x + i + 2] + 16) \gg$$

$$5), 0 \leq x, y < N, \text{ for vertical predictions}$$

$$Pred[x][y] = \big((32 - f) * leftRef[y + i + 1] + f * leftRef[y + i + 2] + 16\big) \gg$$

$$5), 0 \leq x, y < N, \text{ for horizontal predictions,}$$

where *i* and *f* denote the integer part and the fractional part of the projected displacement from the pixel location (*x,y*).

If $\Delta$ denotes the projected displacement, then

$$\Delta = (x + 1) * A, \text{ for horizontal predictions,}$$

and

$$\Delta = (y + 1) * A, \text{ for vertical predictions.}$$

$i = \Delta \gg 5$, where >> is an arithmetic right shift.
$f = \Delta$ & 31, where & is a bit-wise "and" operator.

In the case where $f = 0$, i.e. there is no fractional part, then the prediction is equal to the reference array sample in the direction of prediction.

As we observe from the above expressions, the vertical predictions are independent of the y-coordinate and the horizontal predictions are independent of the x-coordinate. This means that, for vertical predictions, the prediction values are repeated along the direction of prediction from the reference array on the top. Similarly, for horizontal predictions, the prediction values are repeated along the direction of prediction from the reference array on the left. Therefore, if two or more pixel's coordinates have the same projection point on the reference array, they have identical prediction values.

**VTM Extensions (Versatile video coding Test Model)**

In more recent video coding standards, e.g. VVC (Versatile Video Coding), the number of prediction modes has been increased to 67, which includes one planar mode, one DC mode, and 65 angular modes. The higher number of angular modes correspond to 65 prediction directions where the prediction directions correspond to the 33 directions in HEVC plus additional 32 directions that correspond to the middle of any two adjacent directions. In other words, in VTM the prediction direction has twice the angle resolution of HEVC. The higher number of prediction modes makes it possible to exploit the possibility of such angular structures with proposed higher block sizes. Corresponding to higher number of modes, we have higher number of angle parameter A values. The modes are numbered from 2 to 66 in the increasing order and in the same fashion as done in HEVC from 2 to 34.

In addition to the square CUs, VTM can also have rectangular CUs because of Multi-type tree (MTT) splitting modes as illustrated by Figures 1 and 2. In this case, for positive directions, the reference array is constructed as follows:

$$topRef[x] = P[x - 1][-1], 0 \leq x \leq W + H, \text{ for vertical predictions}$$

$$leftRef[y] = P[-1][y - 1], 0 \leq y \leq W + H, \text{ for horizontal predictions}$$

where W and H denote the width and the height of the target CU, respectively. The prediction process basically remains the same as in HEVC. The pixel values are computed as:

$$Pred[x][y] = \big((32 - f) * topRef[x + i + 1] + f * topRef[x + i + 2] + 16\big) \gg 5,$$

$$0 \leq x < W, 0 \leq y < H, \text{ for vertical predictions}$$

$$Pred[x][y] = \big((32 - f) * leftRef[y + i + 1] + f * leftRef[y + i + 2] + 16\big) \gg$$

$$5,\ 0 \le x < W, 0 \le y < H,\ \text{for horizontal predictions,}$$

As in HEVC, the interpolation has a sample accuracy of (1/32).

## Position Dependent intra Prediction Combination

In recent versions of VTM, the results of intra prediction of planar mode are further modified by a position dependent intra prediction combination (PDPC) method. PDPC is an intra prediction method which invokes a combination of the un-filtered reference samples and HEVC style intra prediction (with possibly filtered reference samples). PDPC is applied to the following intra modes without signaling: planar, DC, horizontal, vertical, bottom-left angular mode and its eight adjacent angular modes, and top-right angular mode and its eight adjacent angular modes (called "adjacent modes").

The prediction sample pred(x,y) is obtained using an intra prediction mode (DC, planar, angular) and a linear combination of reference samples according to the Equation 1 as follows:

$$\text{pred(x',y')}=(wL{\times}R(\text{-1,y})\ +\ wT{\times}R(x,\text{-1})\ -\ wTL\ {\times}R(\text{-1,-1})+(64\ -\ wL\ -$$

$$wT+wTL){\times}\text{pred(x',y')} + 32\ )\gg 6\ \ (1)$$

where the prediction sample pred (x', y') is located at (x', y') within the prediction block. The coordinate x of the reference sample R(x,-1) is given by: x = x' + y' + 1, and the coordinate y of the reference sample R(-1,y) is similarly given by: y = x' + y' + 1. R(x,-1), R(-1,y) represent the reference samples located at the top and left of current sample (x', y'), respectively, and R(-1,-1) represents the reference sample located at the top-left corner of the current block and wL is the left PDPC weight, wT is the top PDPC weight and wTL is the top left PDPC weight.

If PDPC is applied to DC, planar, horizontal, and vertical intra modes, additional boundary filters are not needed, as required in the case of HEVC DC mode boundary filter or horizontal/vertical mode edge filters.

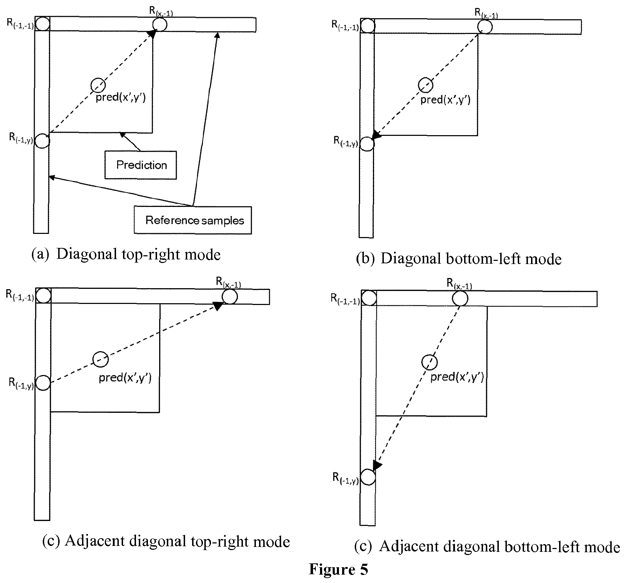

**Figure** 5 illustrates the definition of reference samples R(x,-1), R(-1,y) and R(-1,-1) used by PDPC when applied over various prediction modes. The prediction sample pred (x', y') is located at (x', y') within the prediction block. The coordinate x of the reference sample R(x,-1) is given by: x = x' + y' + 1, and the coordinate y of the reference sample R(-1,y) is similarly given by: y = x' + y' + 1.

The PDPC weights are dependent on prediction modes and are shown in Table 2.

*Table 2- Example of PDPC weights according to prediction modes*

| Prediction modes | wT | wL | wTL |
|---|---|---|---|
| Diagonal top-right | 16 >> ((*y'*<<1) >> *shift*) | 16 >> ((*x'*<<1) >> *shift*) | 0 |
| Diagonal bottom-left | 16 >> (( *y'*<<1) >> *shift*) | 16 >> ((*x'*<<1) >> *shift*) | 0 |
| Adjacent diagonal top-right | 32 >> ((*y'*<<1) >> *shift*) | 0 | 0 |
| Adjacent diagonal bottom-left | 0 | 32 >> ((*x'*<<1) >> *shift*) | 0 |

$$\text{shift} = ((\log2[\text{width}] - 2 + \log2[\text{height}] - 2 + 2) \gg 2)$$

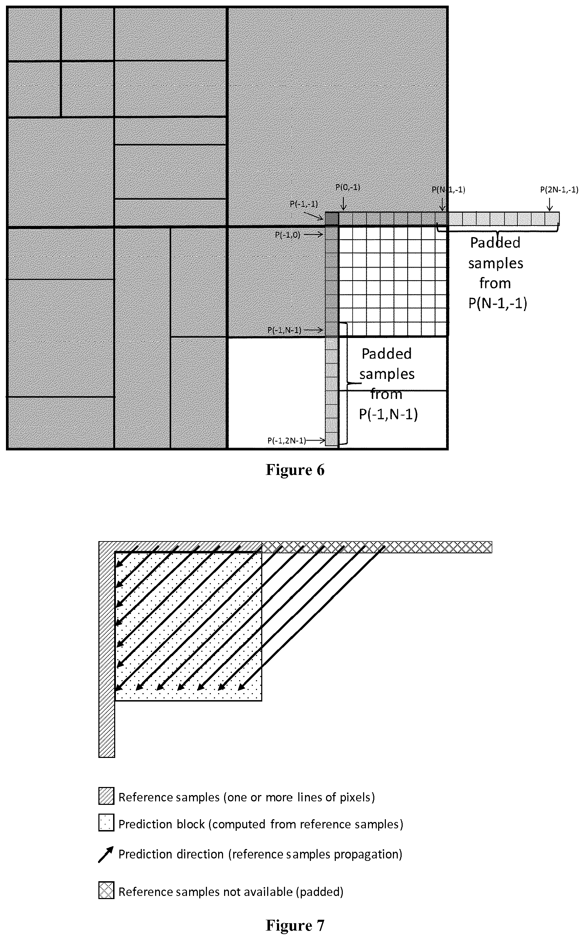

Intra prediction process relies on decoded reference pixels. Some of the reference pixels may be unavailable. It happens mostly on the left and top of image (or slice, or tile), and also inside a (slice, tile, or CTU) depending on the coding order of the blocks (CUs). **Figure 6** depicts a block to be intra predicted for which some of the reference pixels are unavailable. In such a case, padding can be used to create the full reference sample buffer. On figure 6, the unavailable samples are padded from the last available sample, e.g. P[N-1][-1]. **Figure 7** depicts a block to be predicted according to a directional intra prediction for which samples are unavailable. In this case, the unavailable samples can be padded. When reference samples are not available (i.e. not decoded yet, or at frontier of image/CTU), the padded reference can be used. The last available pixel on the row or column is extended to the end of the reference sample buffer. Using padded reference samples is inaccurate and may lead to compression performance loss.

At least one embodiment proposes to improve the prediction efficiency in intra prediction by adapting the prediction when reference samples are not available.

At least one embodiment proposes to manage cases where reference samples are missing for the intra prediction, i.e. when samples are padded to fill the ref sample buffer.

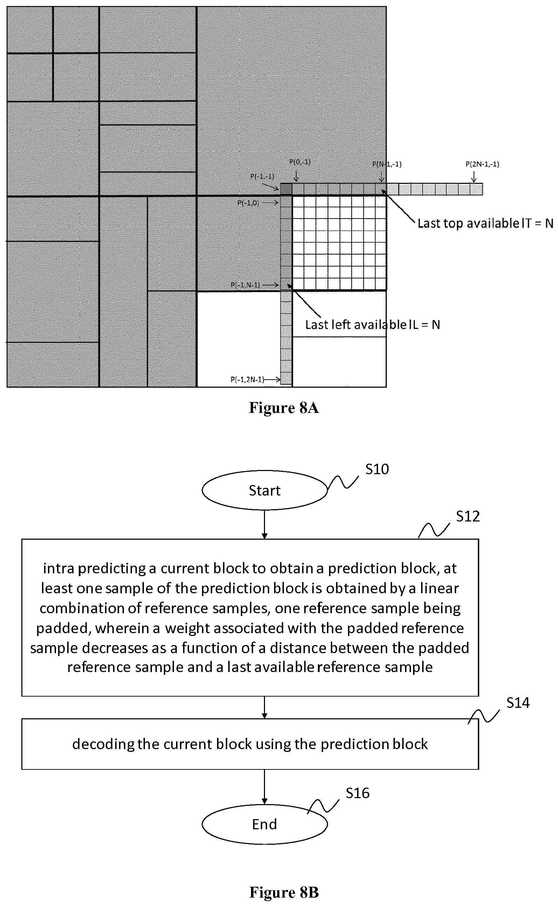

To this aim, during the process of building the reference sample buffer (i.e. topRef[] and leftRef[]), the last top (resp. last left) available reference sample index IT (resp. 1L) is stored in a memory. The index starts at 0 from the top-left pixel (P-1, -1). **Figure 8A** illustrates the process of marking the last available sample. The marking of the last available sample is used in the various embodiments disclosed below. The last available sample is the last non-padded sample.

**Figure 8B** depicts a flowchart of a decoding method according to one embodiment.

The method starts at S10. At S12, a current block is intra predicted to obtain a prediction block. At least one sample of the prediction block is obtained by a linear combination of reference samples, wherein one reference sample is padded. In this case, a weight associated with the padded reference sample decreases as a function of a distance, namely a spatial distance, between the padded reference sample and a last available reference sample. The current block is decoded at S14 using the prediction block. The method ends at S16.

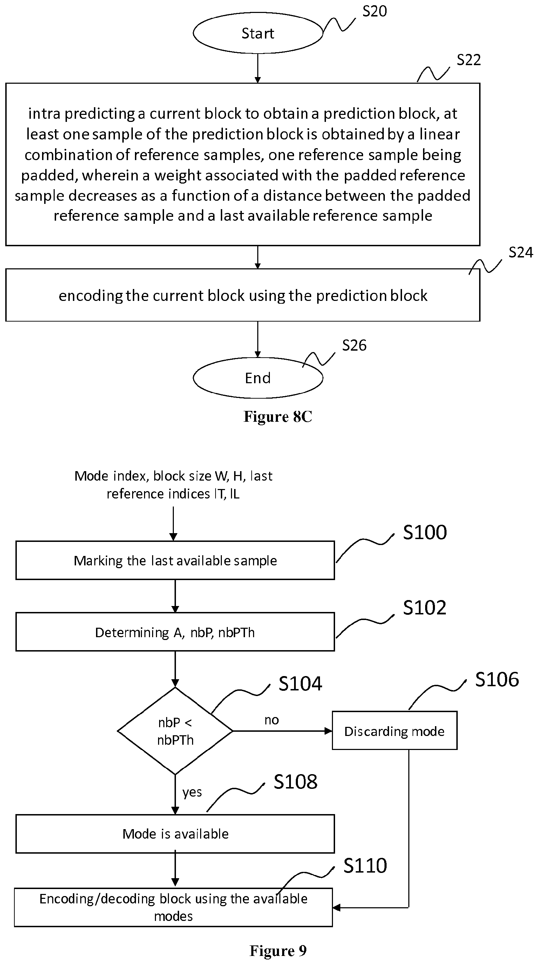

**Figure 8C** depicts a flowchart of an encoding method according to one embodiment. The method starts at S20. At S22, a current block is intra predicted to obtain a prediction block. At least one sample of the prediction block is obtained by a linear combination of reference samples, wherein one reference sample is padded. In this case, a weight associated with the padded reference sample decreases as a function of a distance, namely a spatial distance, between the padded reference sample and a last available reference sample. The current block is encoded at S24 using the prediction block. The method ends at S26.

**Figure 9** depicts a flowchart of a prediction method according to one embodiment. At S100, the last available reference sample is marked as illustrated by Figure 8A. At S102, the values A, nbP and nbPTh are determined. A is the angle parameter and is determined from the intra mode. nbP is the number of predicted pixels (nbP) obtained from padded pixels and nbPTh is a value.

The number of pixels predicted from padded references at the bottom of the block is expressed by:

$$nbP = W - lT + (H \times A \gg 5)$$

where W, H are the width and height of the block, A is the angle parameter as defined in *Table 1.* The value nbPTh can be set to nbPTh = W, or nbPTh = W/2, for positive directions, i.e. A >=0.

In the case where the number of predicted pixels (nbP) coming from padded pixels is too high (nbP >= nbPTh) at S104, then the corresponding direction for directional prediction is disabled (S106). Said otherwise, the corresponding intra mode is discarded (S106). In the case where nbP<nbPTh, the corresponding mode is considered as available (S108) to encode/decode the target block. At S110, the block is encoded (resp. decoded) using the available intra modes. Encoding comprises determining residual block by subtracting prediction block from original block, transform and quantize residual block and entropy encode the quantized transform coefficients and also an indication of an intra prediction mode. Decoding comprises entropy decode transform coefficients and also an indication of an intra prediction mode, dequantize and inverse transform the transform coefficients to obtain a residual block. Reconstructing a block by adding the residual block to the prediction block. The advantage is to reduce the possible intra modes and thus reduce signaling of intra direction. The processing time at encoder can also be reduced since less intra modes are tested, e.g. by rate distortion optimization.

This method can be an encoder-only method, but better performance can be achieved if transmission of the final mode is modified accordingly, so that fewer bits are needed when some modes are unavailable.

In the current codec implementation, among the available 67 intra coding modes, 3 are in the Most Probable Mode list (MPM), and the remaining 64 are coded with fixed length 6 bits.

When some modes are removed, the transmission of the modes can be done as follows:

- 3 are transmitted through MPM list

- n modes are removed (less than 32)

- the remaining (64-n) modes are coded through truncated binary encoding:

  ✓ use the first 5 bits codewords to code n modes
  ✓ use 6 bits to code 64-n-n remaining modes
  ✓ e.g. 15 modes are removed; 3 are coded through MPM list, 49 using truncated binary coding: (5-bits) codewords 00000 (0) to 01110(14) code the first 15 modes, and (6-bits) codewords 011110(30) to 111111(63) code the last 34 modes

- decoding the coding mode m out of 64-n modes is done as follows:

    ✓ decode first 5-bit value v.
    ✓ if (v < n) m = v, stop. Otherwise, decode the 6th bit to obtain v as a 6-bit value. m = v-n

It works in the same way if more MPMs are in the list. For example, 6 modes are in the MPM list. if no mode is removed, the remaining 67-6=61 modes are coded through truncated binary encoding. If n modes are removed, the remaining 67-6-n modes are also coded through truncated binary encoding.

In a variant of the embodiment of Figure 9, the amount of predicted pixels from padded reference can also be expressed as an area aP. In this case, the value nbPTh is replaced by aPTh. The value aPTh can be set to WxH/4, or to WxH/2. aP is computed as follows:

$$aP = \frac{\left( W - lT + (H \times A \gg 5) \right) \times (lT - W) \ll 32}{A}$$

In this variant, in S104, aP is compared to aPTh. Note that equations are applicable for positive vertical directions. For positive horizontal directions, the block is transposed (thus x and y coordinates, W and H sizes, 1T and 1L are swapped), and the equations can also be applied.

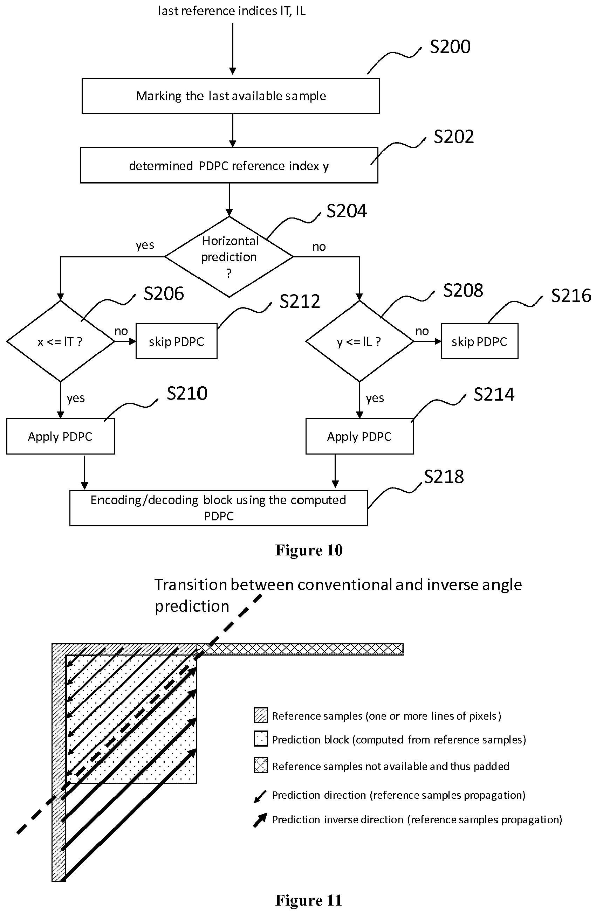

**Figure 10** depicts a flowchart of a prediction method that uses PDPC according to one embodiment. At S200, the last available reference sample is marked as illustrated by Figure 8A. At S202, the indices x and y of the PDPC reference sample are determined. In the case where, the intra mode is a horizontal mode (S204), the method continues at S206 otherwise it continues at S208. In the case where x <= IT, the PDPC is applied (S210). Otherwise (S212) PDPC is skipped or deactivated. PDPC is a block boundary filter. If the reference pixel is a padded one, the advantage of PDPC is significantly reduced. In this case, the corresponding weight is set to 0, which has the same effect as disabling pixel-wise the PDPC filter.

In the case where y <= IL, the PDPC is applied (S214). Otherwise (S216) PDPC is skipped. At S218, the block is encoded (resp. decoded) using the prediction after PDPC is applied. In the case where, PDPC is skipped, the block is encoded (resp. decoded) using the prediction without PDPC. In the case where PDPC is skipped, the block is encoded (resp. decoded) using the prediction without PDPC.

This embodiment makes it possible to reduce computations for pixels without PDPC reference pixel. This embodiment may be used in combination with the embodiment of Figure 9 or independently.

In a variant of the embodiment of Figure 10, instead of abruptly setting the weight to 0, i.e. skipping the PDPC, the weight is smoothly decreased. More precisely, in the case where a PDPC reference sample is not available, the distance (dst) between the PDPC reference sample and the last available reference sample is used to reduce the PDPC weight. The distance is defined as follows: $dst = y + 1 - IL$

The PDPC weight is thus modified as follows:

$$wL' = wL \gg ((dst \ll 1) \gg shift)$$

or the PDPC weight is directly computed as follows:

$$wL = 32 \gg (((x + dst) \ll 1) \gg shift)$$

For horizontal angles, similar equation applies by swapping wL and wT; x and y; 1L and IT.

In another embodiment, the effect of PDPC is increased when the conventional prediction comes from an unavailable (padded) reference sample. If for the current pixel, the reference sample index is above the last available index, then, modify the PDPC weight such that more importance is given to pixel from the left (resp. top) prediction for vertical (resp. horizontal) direction. For example, the PDPC weight is modified so that it decreases slower. In that case the effect of PDPC will be on a larger area. For example, the weights are modified as follows:

$wT = 32 >> ((y \ll 1) \gg shift)$ if reference sample for conventional prediction is available and $wT = 32 >> ((y \gg 1) \gg shift)$ otherwise.

*wL* = 32 >> ((*x* ≪ 1) >> *shift*) if reference sample for conventional prediction is available and *wL* = 32 >> ((*x* ≫ 1) ≫ *shift*) otherwise.

This embodiment may be used in combination with the embodiment of Figure 9 or 10 or independently.

**Figure 11** illustrates a prediction method according to one embodiment. In the case where samples are not available for conventional prediction (e.g. top-right reference samples are not available on Figure 11), prediction from opposite direction is used instead. In the case where the index i of the reference sample to be used is above the last available reference sample, the intra prediction process uses the inverse angle to use the prediction from the other side of the block. If none of the reference samples are available, the conventional padded reference sample is used.

The inverse prediction invPred, or iP is defined as follows:

$$iP[x][y] = \big((256 - h) * leftRef[y + j + 1] + h * leftRef[y + j + 2] + 128\big) \gg 8), 0 \le x, y < N, \text{ for vertical predictions}$$

$$iP[x][y] = \big((256 - h) * topRef[x + j + 1] + h * topRef[x + j + 2] + 128\big) \gg 8), 0 \le x, y < N, \text{ for horizontal predictions,}$$

where *j* and *h* denote the integer part and the fractional part of the projected displacement from the pixel location (*x,y*).

If *Δi* denotes the projected displacement, then

$$\Delta i = (y + 1) * iA, \text{ for horizontal predictions,}$$

and

$$\Delta i = (x + 1) * iA, \text{ for vertical predictions.}$$

$$j = \Delta i \gg 8,$$

$$h = \Delta i \,\&\, 255.$$

The inverse angle parameter iA, or invAngle is derived based on angle parameter A (e.g. A being specified by HEVC):

$$\text{invAngle} = \text{Round}\left(\frac{256*32}{A}\right)$$

This embodiment may be used in combination with any of the previous embodiments and their variants or independently.

In a variant, both predictions (conventional and inverse angle) are averaged to obtain the predicted pixel if both reference pixels are padded ones (unavailable).

In another variant, the transition between conventional and inverse angle is smoothed to avoid creating an undesired edge in the prediction. On figure 11, the transition is indicated by a dotted line. Therefore, in an embodiment, both predictions (conventional and inverse angle) are used with varying weights depending on the distance of the reference pixel from the last available reference pixel.

$$\text{pred}(x, y) = (wl \times \text{invPred}(x, y) + (64 - wl) \times \text{pred}(x, y) + 32) \gg 6$$

where invPred(x, y) is the inverse prediction, pred(x,y) is the conventional prediction that is being modified, and wl is

the weight associated with the inverse prediction at current pixel (x,y). wI can be computed as an increasing function of the distance, , namely a spatial distance, between the reference pixel index (i = $\Delta$ >> 5, defined above) and the last available prediction index IT.

$$wI = \begin{cases} 0 \ if \ x < lT - 1 - i \\ 32 \ if \ x > (lT - 1 - i) + \left((5 \ll shift) \gg 1\right) \\ 32 \gg \left(\left(\left((lT - 1 - i) + ((5 \ll shift) \gg 1) - x\right) \ll 1\right) \gg shift\right) \ otherwise \end{cases}$$

For horizontal angles, similar equations apply by swapping x and y; 1L and 1T; i and inverse angle reference pixel index.

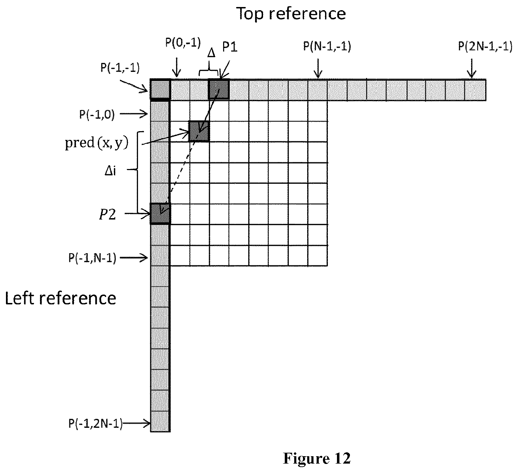

**Figure 12** illustrates a prediction method according to one embodiment. In the case where the conventional prediction comes from an unavailable (padded) reference sample, a linear combination $\hat{P}$ of inverse prediction P2 and conventional prediction P1 is used with a weight that depends on the distance between predicted sample position and reference sample position. As illustrated on Figure 12, in the case where the top reference sample is a padded one, two reference samples are used for computing the prediction for a target pixel. The second reference sample is located at the intersection of the prediction direction with the second reference array. The two reference samples are then weighted with a weight that depends on the distance, namely a spatial distance, between predicted pixel position and reference sample position.

For a positive vertical prediction direction, the first reference sample (from HEVC style intra prediction) is at displacement $\Delta$ from x-coordinate of the target pixel at (x,y). The second reference sample (inverse prediction as defined in embodiment of Figure 11) is at displacement $\Delta_i$ from the y-coordinate of the target pixel at (x,y). Using the first and the second reference samples, an update term is computed and added to the initial prediction (which is the first reference sample value):

$$\Delta P = \frac{(P2 - P1) * \Delta}{\left((1 + x) \ll 5\right) + \Delta}$$

$$\hat{P} = P1 + \Delta P$$

Here $P1$ and $P2$ are the first and the second reference sample values for a target pixel, $\Delta P$ is the update, and $\hat{P}$ is the final prediction value. For positive horizontal prediction directions, the computations are similar, when transposing the block.

At least one embodiment of the prediction methods will model object orientations with intensity variation better than the normal repetitive prediction leading to better RD performance.

This application describes a variety of aspects, including tools, features, embodiments, models, approaches, etc. Many of these aspects are described with specificity and, at least to show the individual characteristics, are often described in a manner that may sound limiting. However, this is for purposes of clarity in description, and does not limit the application or scope of those aspects. Indeed, all of the different aspects can be combined and interchanged to provide further aspects. Moreover, the aspects can be combined and interchanged with aspects described in earlier filings as well.

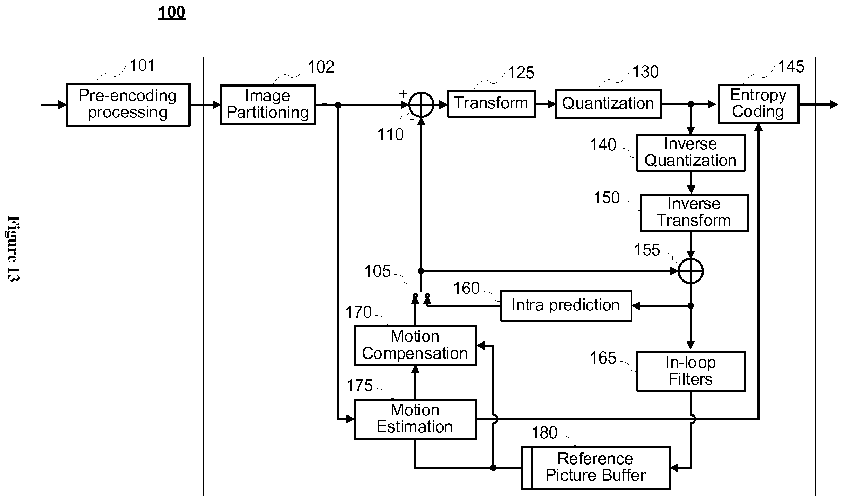

The aspects described and contemplated in this application can be implemented in many different forms. Figures 13, 14 and 15 below provide some embodiments, but other embodiments are contemplated and the discussion of Figures 13, 14 and 15 does not limit the breadth of the implementations. At least one of the aspects generally relates to video encoding and decoding, and at least one other aspect generally relates to transmitting a bitstream generated or encoded. These and other aspects can be implemented as a method, an apparatus, a computer readable storage medium having stored thereon instructions for encoding or decoding video data according to any of the methods described, and/or a computer readable storage medium having stored thereon a bitstream generated according to any of the methods described.

Various methods are described herein, and each of the methods comprises one or more steps or actions for achieving the described method. Unless a specific order of steps or actions is required for proper operation of the method, the order and/or use of specific steps and/or actions may be modified or combined.

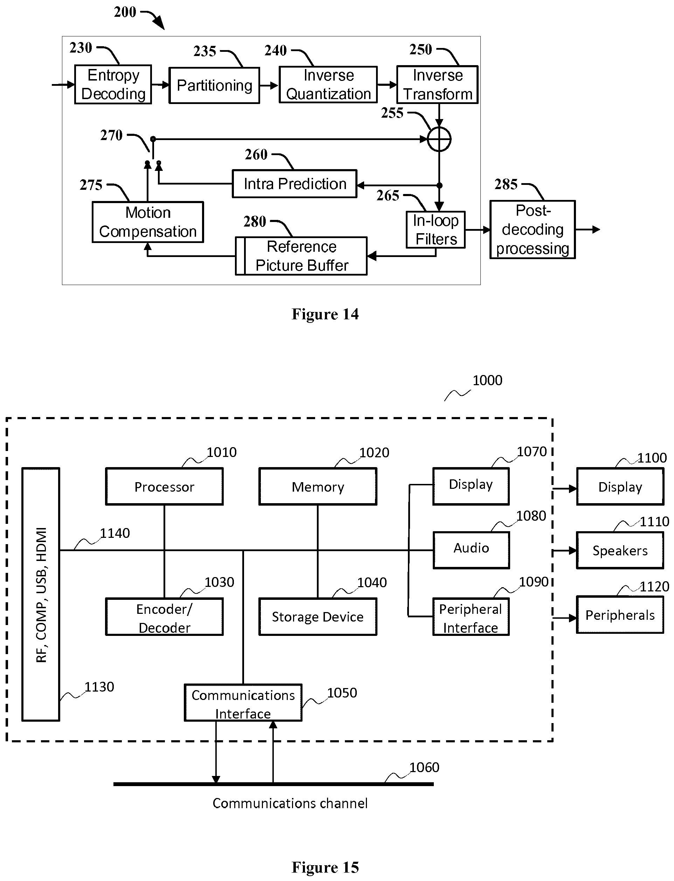

Various methods and other aspects described in this application can be used to modify modules, for example, the intra prediction, entropy coding, and/or decoding modules (160, 260, 145, 230), of a video encoder 100 and decoder 200 as shown in Figures 13 and 14. Moreover, the present aspects are not limited to VVC or HEVC, and can be applied, for example, to other standards and recommendations, whether pre-existing or future-developed, and extensions of any such standards and recommendations (including VVC and HEVC). Unless indicated otherwise, or technically precluded, the aspects described in this application can be used individually or in combination.

Various numeric values are used in the present application, for example, nbPTh. The specific values are for example purposes and the aspects described are not limited to these specific values.

Figure 13 illustrates an encoder 100. Variations of this encoder 100 are contemplated, but the encoder 100 is described below for purposes of clarity without describing all expected variations.

Before being encoded, the video sequence may go through pre-encoding processing (101), for example, applying a color transform to the input color picture (e.g., conversion from RGB 4:4:4 to YCbCr 4:2:0), or performing a remapping of the input picture components in order to get a signal distribution more resilient to compression (for instance using a histogram equalization of one of the color components). Metadata can be associated with the pre-processing, and attached to the bitstream.

In the encoder 100, a picture is encoded by the encoder elements as described below. The picture to be encoded is partitioned (102) and processed in units of, for example, CUs. Each unit is encoded using, for example, either an intra or inter mode. When a unit is encoded in an intra mode, it performs intra prediction (160). In an inter mode, motion estimation (175) and compensation (170) are performed. The encoder decides (105) which one of the intra mode or inter mode to use for encoding the unit, and indicates the intra/inter decision by, for example, a prediction mode flag. Prediction residuals are calculated, for example, by subtracting (110) the predicted block from the original image block.

The prediction residuals are then transformed (125) and quantized (130). The quantized transform coefficients, as well as motion vectors and other syntax elements, are entropy coded (145) to output a bitstream. The encoder can skip the transform and apply quantization directly to the non-transformed residual signal. The encoder can bypass both transform and quantization, i.e., the residual is coded directly without the application of the transform or quantization processes.

The encoder decodes an encoded block to provide a reference for further predictions.

The quantized transform coefficients are de-quantized (140) and inverse transformed (150) to decode prediction residuals. Combining (155) the decoded prediction residuals and the predicted block, an image block is reconstructed. In-loop filters (165) are applied to the reconstructed picture to perform, for example, deblocking/SAO (Sample Adaptive Offset) filtering to reduce encoding artifacts. The filtered image is stored at a reference picture buffer (180).

Figure 14 illustrates a block diagram of a video decoder 200. In the decoder 200, a bitstream is decoded by the decoder elements as described below. Video decoder 200 generally performs a decoding pass reciprocal to the encoding pass as described in Figure 13. The encoder 100 also generally performs video decoding as part of encoding video data.

In particular, the input of the decoder includes a video bitstream, which can be generated by video encoder 100. The bitstream is first entropy decoded (230) to obtain transform coefficients, motion vectors, and other coded information. The picture partition information indicates how the picture is partitioned. The decoder may therefore divide (235) the picture according to the decoded picture partitioning information. The transform coefficients are de-quantized (240) and inverse transformed (250) to decode the prediction residuals. Combining (255) the decoded prediction residuals and the predicted block, an image block is reconstructed. The predicted block can be obtained (270) from intra prediction (260) or motion-compensated prediction (i.e., inter prediction) (275). In-loop filters (265) are applied to the reconstructed image. The filtered image is stored at a reference picture buffer (280).

The decoded picture can further go through post-decoding processing (285), for example, an inverse color transform (e.g. conversion from YCbCr 4:2:0 to RGB 4:4:4) or an inverse remapping performing the inverse of the remapping process performed in the pre-encoding processing (101). The post-decoding processing can use metadata derived in the pre-encoding processing and signaled in the bitstream.

Figure 15 illustrates a block diagram of an example of a system in which various aspects and embodiments are implemented. System 1000 can be embodied as a device including the various components described below and is configured to perform one or more of the aspects described in this document. Examples of such devices, include, but are not limited to, various electronic devices such as personal computers, laptop computers, smartphones, tablet computers, digital multimedia set top boxes, digital television receivers, personal video recording systems, connected home appliances, and servers. Elements of system 1000, singly or in combination, can be embodied in a single integrated circuit (IC), multiple ICs, and/or discrete components. For example, in at least one embodiment, the processing and encoder/decoder elements of system 1000 are distributed across multiple ICs and/or discrete components. In various embodiments, the system 1000 is communicatively coupled to one or more other systems, or other electronic devices, via, for example, a communications bus or through dedicated input and/or output ports. In various embodiments, the system 1000 is configured to implement one or more of the aspects described in this document.

The system 1000 includes at least one processor 1010 configured to execute instructions loaded therein for implementing, for example, the various aspects described in this document. Processor 1010 can include embedded memory, input output interface, and various other circuitries as known in the art. The system 1000 includes at least one memory 1020 (e.g., a volatile memory device, and/or a non-volatile memory device). System 1000 includes a storage device 1040, which can include non-volatile memory and/or volatile memory, including, but not limited to, Electrically Erasable Programmable Read-Only Memory (EEPROM), Read-Only Memory (ROM), Programmable Read-Only Memory (PROM), Random Access Memory (RAM), Dynamic Random Access Memory (DRAM), Static Random Access Memory (SRAM), flash, magnetic disk drive, and/or optical disk drive. The storage device 1040 can include an internal storage device, an attached storage device (including detachable and non-detachable storage devices), and/or a network accessible storage device, as non-limiting examples.

System 1000 includes an encoder/decoder module 1030 configured, for example, to process data to provide an encoded video or decoded video, and the encoder/decoder module 1030 can include its own processor and memory. The encoder/decoder module 1030 represents module(s) that can be included in a device to perform the encoding and/or decoding functions. As is known, a device can include one or both of the encoding and decoding modules. Additionally, encoder/decoder module 1030 can be implemented as a separate element of system 1000 or can be incorporated within processor 1010 as a combination of hardware and software as known to those skilled in the art.

Program code to be loaded onto processor 1010 or encoder/decoder 1030 to perform the various aspects described in this document can be stored in storage device 1040 and subsequently loaded onto memory 1020 for execution by processor 1010. In accordance with various embodiments, one or more of processor 1010, memory 1020, storage device 1040, and encoder/decoder module 1030 can store one or more of various items during the performance of the processes described in this document. Such stored items can include, but are not limited to, the input video, the decoded video or portions of the decoded video, the bitstream, matrices, variables, and intermediate or final results from the processing of equations, formulas, operations, and operational logic.

In some embodiments, memory inside of the processor 1010 and/or the encoder/decoder module 1030 is used to store instructions and to provide working memory for processing that is needed during encoding or decoding. In other embodiments, however, a memory external to the processing device (for example, the processing device can be either the processor 1010 or the encoder/decoder module 1030) is used for one or more of these functions. The external memory can be the memory 1020 and/or the storage device 1040, for example, a dynamic volatile memory and/or a non-volatile flash memory. In several embodiments, an external non-volatile flash memory is used to store the operating system of, for example, a television. In at least one embodiment, a fast external dynamic volatile memory such as a RAM is used as working memory for video coding and decoding operations, such as for MPEG-2 (MPEG refers to the Moving Picture Experts Group, MPEG-2 is also referred to as ISO/IEC 13818, and 13818-1 is also known as H.222, and 13818-2 is also known as H.262), HEVC (HEVC refers to High Efficiency Video Coding, also known as H.265 and MPEG-H Part 2), or VVC (Versatile Video Coding, a new standard being developed by JVET, the Joint Video Experts Team).

The input to the elements of system 1000 can be provided through various input devices as indicated in block 1130. Such input devices include, but are not limited to, (i) a radio frequency (RF) portion that receives an RF signal transmitted, for example, over the air by a broadcaster, (ii) a Component (COMP) input terminal (or a set of COMP input terminals), (iii) a Universal Serial Bus (USB) input terminal, and/or (iv) a High Definition Multimedia Interface (HDMI) input terminal. Other examples, not shown in FIG. 10, include composite video.

In various embodiments, the input devices of block 1130 have associated respective input processing elements as known in the art. For example, the RF portion can be associated with elements suitable for (i) selecting a desired frequency (also referred to as selecting a signal, or band-limiting a signal to a band of frequencies), (ii) downconverting the selected signal, (iii) band-limiting again to a narrower band of frequencies to select (for example) a signal frequency band which can be referred to as a channel in certain embodiments, (iv) demodulating the downconverted and bandlimited signal, (v) performing error correction, and (vi) demultiplexing to select the desired stream of data packets. The RF portion of various embodiments includes one or more elements to perform these functions, for example, frequency selectors, signal selectors, band-limiters, channel selectors, filters, downconverters, demodulators, error correctors, and demultiplexers. The RF portion can include a tuner that performs various of these functions, including, for example, downconverting the received signal to a lower frequency (for example, an intermediate frequency or a near-baseband frequency) or to baseband. In one set-top box embodiment, the RF portion and its associated input processing element receives an RF signal transmitted over a wired (for example, cable) medium, and performs frequency selection by filtering, downconverting, and filtering again to a desired frequency band. Various embodiments rearrange the order of the above-described (and other) elements, remove some of these elements, and/or add other elements performing similar or different functions. Adding elements can include inserting elements in between existing elements, such as, for example, inserting amplifiers and an analog-to-digital converter. In various embodiments, the RF portion includes an antenna.

Additionally, the USB and/or HDMI terminals can include respective interface processors for connecting system 1000 to other electronic devices across USB and/or HDMI connections. It is to be understood that various aspects of input processing, for example, Reed-Solomon error correction, can be implemented, for example, within a separate input processing IC or within processor 1010 as necessary. Similarly, aspects of USB or HDMI interface processing can be implemented within separate interface ICs or within processor 1010 as necessary. The demodulated, error corrected, and demultiplexed stream is provided to various processing elements, including, for example, processor 1010, and encoder/decoder 1030 operating in combination with the memory and storage elements to process the datastream as necessary for presentation on an output device.

Various elements of system 1000 can be provided within an integrated housing, Within the integrated housing, the various elements can be interconnected and transmit data therebetween using suitable connection arrangement, for example, an internal bus as known in the art, including the Inter-IC (I2C) bus, wiring, and printed circuit boards.

The system 1000 includes communication interface 1050 that enables communication with other devices via communication channel 1060. The communication interface 1050 can include, but is not limited to, a transceiver configured to transmit and to receive data over communication channel 1060. The communication interface 1050 can include, but is not limited to, a modem or network card and the communication channel 1060 can be implemented, for example, within a wired and/or a wireless medium.

Data is streamed, or otherwise provided, to the system 1000, in various embodiments, using a wireless network such as a Wi-Fi network, for example IEEE 802.11 (IEEE refers to the Institute of Electrical and Electronics Engineers). The Wi-Fi signal of these embodiments is received over the communications channel 1060 and the communications interface 1050 which are adapted for Wi-Fi communications. The communications channel 1060 of these embodiments is typically connected to an access point or router that provides access to external networks including the Internet for allowing streaming applications and other over-the-top communications. Other embodiments provide streamed data to the system 1000 using a set-top box that delivers the data over the HDMI connection of the input block 1130. Still other embodiments provide streamed data to the system 1000 using the RF connection of the input block 1130. As indicated above, various embodiments provide data in a non-streaming manner. Additionally, various embodiments use wireless networks other than Wi-Fi, for example a cellular network or a Bluetooth network.

The system 1000 can provide an output signal to various output devices, including a display 1100, speakers 1110, and other peripheral devices 1120. The display 1100 of various embodiments includes one or more of, for example, a touchscreen display, an organic light-emitting diode (OLED) display, a curved display, and/or a foldable display. The display 1100 can be for a television, a tablet, a laptop, a cell phone (mobile phone), or other device. The display 1100 can also be integrated with other components (for example, as in a smart phone), or separate (for example, an external monitor for a laptop). The other peripheral devices 1120 include, in various examples of embodiments, one or more of a stand-alone digital video disc (or digital versatile disc) (DVR, for both terms), a disk player, a stereo system, and/or a lighting system. Various embodiments use one or more peripheral devices 1120 that provide a function based on the output of the system 1000. For example, a disk player performs the function of playing the output of the system 1000.

In various embodiments, control signals are communicated between the system 1000 and the display 1100, speakers 1110, or other peripheral devices 1120 using signaling such as AV.Link, Consumer Electronics Control (CEC), or other communications protocols that enable device-to-device control with or without user intervention. The output devices can be communicatively coupled to system 1000 via dedicated connections through respective interfaces 1070, 1080, and 1090. Alternatively, the output devices can be connected to system 1000 using the communications channel 1060 via the communications interface 1050. The display 1100 and speakers 1110 can be integrated in a single unit with the other components of system 1000 in an electronic device such as, for example, a television. In various embodiments, the display interface 1070 includes a display driver, such as, for example, a timing controller (T Con) chip.

The display 1100 and speaker 1110 can alternatively be separate from one or more of the other components, for example, if the RF portion of input 1130 is part of a separate set-top box. In various embodiments in which the display 1100 and speakers 1110 are external components, the output signal can be provided via dedicated output connections, including, for example, HDMI ports, USB ports, or COMP outputs.

The embodiments can be carried out by computer software implemented by the processor 1010 or by hardware, or by a combination of hardware and software. As a non-limiting example, the embodiments can be implemented by one or more integrated circuits. The memory 1020 can be of any type appropriate to the technical environment and can be implemented using any appropriate data storage technology, such as optical memory devices, magnetic memory devices, semiconductor-based memory devices, fixed memory, and removable memory, as non-limiting examples. The processor 1010 can be of any type appropriate to the technical environment, and can encompass one or more of microprocessors, general purpose computers, special purpose computers, and processors based on a multi-core architecture, as non-limiting examples.

Various implementations involve decoding. "Decoding", as used in this application, can encompass all or part of the processes performed, for example, on a received encoded sequence in order to produce a final output suitable for display. In various embodiments, such processes include one or more of the processes typically performed by a decoder, for example, entropy decoding, inverse quantization, inverse transformation, and differential decoding. In various embodiments, such processes also, or alternatively, include processes performed by a decoder of various implementations described in this application, for example, intra prediction using PDPC.

As further examples, in one embodiment "decoding" refers only to entropy decoding, in another embodiment "decoding" refers only to differential decoding, and in another embodiment "decoding" refers to a combination of entropy decoding and differential decoding. Whether the phrase "decoding process" is intended to refer specifically to a subset of operations or generally to the broader decoding process will be clear based on the context of the specific descriptions and is believed to be well understood by those skilled in the art.

Various implementations involve encoding. In an analogous way to the above discussion about "decoding", "encoding" as used in this application can encompass all or part of the processes performed, for example, on an input video sequence in order to produce an encoded bitstream. In various embodiments, such processes include one or more of the processes typically performed by an encoder, for example, partitioning, differential encoding, transformation, quantization, and entropy encoding. In various embodiments, such processes also, or alternatively, include processes performed by an encoder of various implementations described in this application, for example, intra prediction.

As further examples, in one embodiment "encoding" refers only to entropy encoding, in another embodiment "encoding" refers only to differential encoding, and in another embodiment "encoding" refers to a combination of differential encoding and entropy encoding. Whether the phrase "encoding process" is intended to refer specifically to a subset of operations or generally to the broader encoding process will be clear based on the context of the specific descriptions and is believed to be well understood by those skilled in the art.

Note that the syntax elements as used herein are descriptive terms. As such, they do not preclude the use of other syntax element names.

When a figure is presented as a flow diagram, it should be understood that it also provides a block diagram of a corresponding apparatus. Similarly, when a figure is presented as a block diagram, it should be understood that it also provides a flow diagram of a corresponding method/process.

Various embodiments refer to rate distortion optimization. In particular, during the encoding process, the balance or trade-off between the rate and distortion is usually considered, often given the constraints of computational complexity. The rate distortion optimization is usually formulated as minimizing a rate distortion function, which is a weighted sum of the rate and of the distortion. There are different approaches to solve the rate distortion optimization problem. For example, the approaches may be based on an extensive testing of all encoding options, including all considered modes or coding parameters values, with a complete evaluation of their coding cost and related distortion of the reconstructed signal after coding and decoding. Faster approaches may also be used, to save encoding complexity, in particular with computation of an approximated distortion based on the prediction or the prediction residual signal, not the reconstructed one. Mix of these two approaches can also be used, such as by using an approximated distortion for only some of the possible encoding options, and a complete distortion for other encoding options. Other approaches only evaluate a subset of the possible encoding options. More generally, many approaches employ any of a variety of techniques to perform the optimization, but the optimization is not necessarily a complete evaluation of both the coding cost and related distortion.

The implementations and aspects described herein can be implemented in, for example, a method or a process, an apparatus, a software program, a data stream, or a signal. Even if only discussed in the context of a single form of implementation (for example, discussed only as a method), the implementation of features discussed can also be implemented in other forms (for example, an apparatus or program). An apparatus can be implemented in, for example, appropriate hardware, software, and firmware. The methods can be implemented in, for example, , a processor, which refers to processing devices in general, including, for example, a computer, a microprocessor, an integrated circuit, or a programmable logic device. Processors also include communication devices, such as, for example, computers, cell phones, portable/personal digital assistants ("PDAs"), and other devices that facilitate communication of information between end-users.

Reference to "one embodiment" or "an embodiment" or "one implementation" or "an implementation", as well as other variations thereof, means that a particular feature, structure, characteristic, and so forth described in connection with the embodiment is included in at least one embodiment. Thus, the appearances of the phrase "in one embodiment" or "in an embodiment" or "in one implementation" or "in an implementation", as well any other variations, appearing in various places throughout this application are not necessarily all referring to the same embodiment.

Additionally, this application may refer to "determining" various pieces of information. Determining the information can include one or more of, for example, estimating the information, calculating the information, predicting the information, or retrieving the information from memory.

Further, this application may refer to "accessing" various pieces of information. Accessing the information can include one or more of, for example, receiving the information, retrieving the information (for example, from memory), storing the information, moving the information, copying the information, calculating the information, determining the information, predicting the information, or estimating the information.

Additionally, this application may refer to "receiving" various pieces of information. Receiving is, as with "accessing", intended to be a broad term. Receiving the information can include one or more of, for example, accessing the information, or retrieving the information (for example, from memory). Further, "receiving" is typically involved, in one way or another, during operations such as, for example, storing the information, processing the information, transmitting the information, moving the information, copying the information, erasing the information, calculating the information, determining the information, predicting the information, or estimating the information.

It is to be appreciated that the use of any of the following "/", "and/or", and "at least one of', for example, in the cases of "A/B", "A and/or B" and "at least one of A and B", is intended to encompass the selection of the first listed option (A) only, or the selection of the second listed option (B) only, or the selection of both options (A and B). As a further example, in the cases of "A, B, and/or C" and "at least one of A, B, and C", such phrasing is intended to encompass the selection of the first listed option (A) only, or the selection of the second listed option (B) only, or the selection of the third listed option (C) only, or the selection of the first and the second listed options (A and B) only, or the selection of the first and third listed options (A and C) only, or the selection of the second and third listed options (B and C) only, or the selection of all three options (A and B and C). This may be extended, as is clear to one of ordinary skill in this and related arts, for as many items as are listed.

Also, as used herein, the word "signal" refers to, among other things, indicating something to a corresponding decoder. For example, in certain embodiments the encoder signals a particular one of an intra prediction mode. In this way, in an embodiment the same parameter is used at both the encoder side and the decoder side. Thus, for example, an encoder can transmit (explicit signaling) a particular parameter to the decoder so that the decoder can use the same particular parameter. Conversely, if the decoder already has the particular parameter as well as others, then signaling can be used without transmitting (implicit signaling) to simply allow the decoder to know and select the particular parameter. By avoiding transmission of any actual functions, a bit savings is realized in various embodiments. It is to be appreciated that signaling can be accomplished in a variety of ways. For example, one or more syntax elements, flags, and so forth are used to signal information to a corresponding decoder in various embodiments. While the preceding relates to the verb form of the word "signal", the word "signal" can also be used herein as a noun.

As will be evident to one of ordinary skill in the art, implementations can produce a variety of signals formatted to carry information that can be, for example, stored or transmitted. The information can include, for example, instructions for performing a method, or data produced by one of the described implementations. For example, a signal can be formatted to carry the bitstream of a described embodiment. Such a signal can be formatted, for example, as an electromagnetic wave (for example, using a radio frequency portion of spectrum) or as a baseband signal. The formatting can include, for example, encoding a data stream and modulating a carrier with the encoded data stream. The information that the signal carries can be, for example, analog or digital information. The signal can be transmitted over a variety of different wired or wireless links, as is known. The signal can be stored on a processor-readable medium.

We describe a number of embodiments. Features of these embodiments can be provided alone or in any combination. Further, embodiments can include one or more of the following features, devices, or aspects, alone or in any combination, across various claim categories and types:

- marking the last available reference sample;
- removing intra prediction mode in the case where a number of samples predicted from padded samples is above a value;
- uses the inverse prediction direction in the case where the index of the reference sample to be used is above the last available reference sample, i.e. in the case where the reference sample to be used is padded;
- disable PDPC at a pixel level in the case where the PDPC reference sample is a padded one;
- modifying the PDPC weight for a given padded PDPC reference sample as a function of the distance between the PDPC reference sample and the last available reference sample;
- modifying directional prediction by averaging two predictors: one generated from a first reference sample using a given direction and one generated from a second reference sample using an inverse direction in the case where both reference samples are padded;
- modifying directional prediction by further weighting the first and second reference samples with weights that depend on the distance of the reference sample from the last available reference sample.
- A TV, set-top box, cell phone, tablet, or other electronic device that performs intra prediction according to any of the embodiments described.
- A TV, set-top box, cell phone, tablet, or other electronic device that performs intra prediction according to any of the embodiments described, and that displays (e.g. using a monitor, screen, or other type of display) a resulting image.
- A TV, set-top box, cell phone, tablet, or other electronic device that tunes (e.g. using a tuner) a channel to receive a signal including an encoded image, and performs intra prediction according to any of the embodiments described.
- A TV, set-top box, cell phone, tablet, or other electronic device that receives (e.g. using an antenna) a signal over the air that includes an encoded image, and performs intra prediction according to any of the embodiments described.

According to a general aspect of at least one embodiment, a decoding method is presented that comprises:

- intra predicting a current block to obtain a prediction block;
- decoding the current block using the prediction block;
  wherein at least one sample of the prediction block is obtained by a linear combination of reference samples, one reference sample being padded, wherein a weight associated with the padded reference sample decreases as a function of a distance between the padded reference sample and a last available reference sample.

According to a general aspect of at least one embodiment, an encoding method is presented that comprises:

- intra predicting a current block to obtain a prediction block;
- encoding the current block using the prediction block;

wherein at least one sample of the prediction block is obtained by a linear combination of reference samples, one reference sample being padded, wherein a weight associated with the padded reference sample decreases as a function of a distance between the padded reference sample and a last available reference sample.

According to a general aspect of at least one embodiment, an apparatus is presented that comprises one or more processors configured to perform:

intra predicting a current block to obtain a prediction block;
decoding the current block using the prediction block;
wherein at least one sample of the prediction block is obtained by a linear combination of reference samples, one reference sample being padded, wherein a weight associated with the padded reference sample decreases as a function of a distance between the padded reference sample and a last available reference sample.

According to a general aspect of at least one embodiment, an apparatus is presented that comprises one or more processors configured to perform:

intra predicting a current block to obtain a prediction block;
encoding the current block using the prediction block;
wherein at least one sample of the prediction block is obtained by a linear combination of reference samples, one reference sample being padded, wherein a weight associated with the padded reference sample decreases as a function of a distance between the padded reference sample and a last available reference sample.

According to an aspect of at least one embodiment, in the case where, for a given angular intra prediction mode associated with an angle, a reference sample to be used to predict a current sample of the current block is a padded sample, the weight decreases slower than in the case where said reference sample is not padded.

According to an aspect of at least one embodiment, in the case where, for a given intra prediction mode, the number of samples in a prediction block obtained from padded reference samples is higher than a value, the given intra prediction mode is disabled for the current block.

According to an aspect of at least one embodiment, in the case where, for a given angular intra prediction mode associated with an angle, a reference sample to be used to predict a current sample of the current block is a padded sample, the method comprises predicting the current sample using a reference sample from an opposite side of the current block according to an angular intra prediction mode associated with an inverse angle.

According to an aspect of at least one embodiment, in the case where, for a given angular intra prediction mode associated with an angle, a reference sample to be used to obtain a first prediction of a current sample of the current block is a padded sample and in the case where a reference sample from an opposite side of the current block to be used to obtain a second prediction of the current sample according to an angular intra prediction mode associated with an inverse angle is a padded sample, the method comprises predicting the current sample using an average of said first and second predictions.

According to an aspect of at least one embodiment, in the case where, for a given angular intra prediction mode associated with an angle, a reference sample to be used to obtain a first prediction of a current sample of the current block is a padded sample and in the case where a reference sample from an opposite side of the current block to be used to obtain a second prediction of the current sample according to an angular intra prediction mode associated with an inverse angle is a padded sample, the method comprises predicting the current sample using a linear combination of said first and second predictions using weights, each weight depending on a distance between the reference sample and the last available reference sample.

According to an aspect of at least one embodiment, in the case where, for a given angular intra prediction mode associated with an angle, a reference sample to be used to obtain a first prediction of a current sample of the current block is a padded sample and in the case where a reference sample from an opposite side of the current block to be used to obtain a second prediction of the current sample according to an angular intra prediction mode associated with an inverse angle is a padded sample, the method comprises predicting the current sample using a linear combination of said first and second predictions using weights, each weight depending on a distance between the reference sample and the first prediction sample.

## Claims

1. A decoding method comprising:

   - intra predicting a current block to obtain a prediction block;
   - decoding the current block using the prediction block;
   wherein at least one sample of the prediction block is obtained by a linear combination of reference samples, one reference sample being padded, wherein a weight associated with the padded reference sample decreases as a function of a distance between the padded reference sample and a last available reference sample.

2. The method of claim 1, wherein in the case where, for a given angular intra prediction mode associated with an angle, a reference sample to be used to predict a current sample of the current block is a padded sample, the weight decreases slower than in the case where said reference sample is not padded.

3. The method of claim 1, wherein in the case where, for a given intra prediction mode, the number of samples in a prediction block obtained from padded reference samples is higher than a value, the given intra prediction mode is disabled for the current block.

4. The method of claim 1, wherein in the case where, for a given angular intra prediction mode associated with an angle, a reference sample to be used to predict a current sample of the current block is a padded sample, the method comprises predicting the current sample using a reference sample from an opposite side of the current block according to an angular intra prediction mode associated with an inverse angle.

5. The method of claim 4, wherein in the case where, for a given angular intra prediction mode associated with an angle, a reference sample to be used to obtain a first prediction of a current sample of the current block is a padded sample and in the case where a reference sample from an opposite side of the current block to be used to obtain a second prediction of the current sample according to an angular intra prediction mode associated with an inverse angle is a padded sample, the method comprises predicting the current sample using an average of said first and second predictions.

6. The method of claim 4, wherein in the case where, for a given angular intra prediction mode associated with an angle, a reference sample to be used to obtain a first prediction of a current sample of the current block is a padded sample and in the case where a reference sample from an opposite side of the current block to be used to obtain a second prediction of the current sample according to an angular intra prediction mode associated with an inverse angle is a padded sample, the method comprises predicting the current sample using a linear combination of said first and second predictions using weights, each weight depending on a distance between the reference sample and the last available reference sample.

7. The method of claim 1, wherein in the case where, for a given angular intra prediction mode associated with an angle, a reference sample to be used to obtain a first prediction of a current sample of the current block is a padded sample and in the case where a reference sample from an opposite side of the current block to be used to obtain a second prediction of the current sample according to an angular intra prediction mode associated with an inverse angle is a padded sample, the method comprises predicting the current sample using a linear combination of said first and second predictions using weights, each weight depending on a distance between the reference sample and the first prediction sample.

8. An encoding method comprising:

   - intra predicting a current block to obtain a prediction block;
   - encoding the current block using the prediction block;

   wherein at least one sample of the prediction block is obtained by a linear combination of reference samples, one reference sample being padded, wherein a weight associated with the padded reference sample decreases as a function of a distance between the padded reference sample and a last available reference sample.

9. The method of claim 8, wherein in the case where, for a given angular intra prediction mode associated with an angle, a reference sample to be used to predict a current sample of the current block is a padded sample, the weight decreases slower than in the case where said reference sample is not padded.

10. The method of claim 8, wherein in the case where, for a given intra prediction mode, the number of samples in a prediction block obtained from padded reference samples is higher than a value, the given intra prediction mode is disabled for the current block.

11. The method of claim 8, wherein in the case where, for a given angular intra prediction mode associated with an angle, a reference sample to be used to predict a current sample of the current block is a padded sample, the method comprises predicting the current sample using a reference sample from an opposite side of the current block according to an angular intra prediction mode associated with an inverse angle.

12. The method of claim 11, wherein in the case where, for a given angular intra prediction mode associated with an angle, a reference sample to be used to obtain a first prediction of a current sample of the current block is a padded sample and in the case where a reference sample from an opposite side of the current block to be used to obtain a second prediction of the current sample according to an angular intra prediction mode associated with an inverse angle is a padded sample, the method comprises predicting the current sample using an average of said first and second predictions.

13. The method of claim 11, wherein in the case where, for a given angular intra prediction mode associated with an angle, a reference sample to be used to obtain a first prediction of a current sample of the current block is a padded sample and in the case where a reference sample from an opposite side of the current block to be used to obtain a second prediction of the current sample according to an angular intra prediction mode associated with an inverse angle is a padded sample, the method comprises predicting the current sample using a linear combination of said first and second predictions using weights, each weight depending on a distance between the reference sample and the last available reference sample.

14. The method of claim 8, wherein in the case where, for a given angular intra prediction mode associated with an angle, a reference sample to be used to obtain a first prediction of a current sample of the current block is a padded sample and in the case where a reference sample from an opposite side of the current block to be used to obtain a second prediction of the current sample according to an angular intra prediction mode associated with an inverse angle is a padded sample, the method comprises predicting the current sample using a linear combination of said first and second predictions using weights, each weight depending on a distance between the reference sample and the first prediction sample.

15. An apparatus comprising one or more processors configured to perform:

    intra predicting a current block to obtain a prediction block;
    decoding the current block using the prediction block;
    wherein at least one sample of the prediction block is obtained by a linear combination of reference samples, one reference sample being padded, wherein a weight associated with the padded reference sample decreases as a function of a distance between the padded reference sample and a last available reference sample.

16. An apparatus comprising one or more processors configured to perform:

    intra predicting a current block to obtain a prediction block;
    encoding the current block using the prediction block;
    wherein at least one sample of the prediction block is obtained by a linear combination of reference samples, one reference sample being padded, wherein a weight associated with the padded reference sample decreases as a function of a distance between the padded reference sample and a last available reference sample.

SPLIT_BT_VER          SPLIT_BT_HOR          SPLIT_TT_VER          SPLIT_TT_HOR

**Figure 1**

**Figure 2**

**Figure 3**

**Figure 4**

(a) Diagonal top-right mode

(b) Diagonal bottom-left mode

(c) Adjacent diagonal top-right mode

(c) Adjacent diagonal bottom-left mode

**Figure 5**

**Figure 6**

Reference samples (one or more lines of pixels)

Prediction block (computed from reference samples)

Prediction direction (reference samples propagation)

Reference samples not available (padded)

**Figure 7**

P(0,-1)　　P(N-1,-1)　　　P(2N-1,-1)

P(-1,-1)

P(-1,0)

Last top available IT = N

P(-1,N-1)

Last left available IL = N

P(-1,2N-1)

**Figure 8A**

Start — S10

intra predicting a current block to obtain a prediction block, at least one sample of the prediction block is obtained by a linear combination of reference samples, one reference sample being padded, wherein a weight associated with the padded reference sample decreases as a function of a distance between the padded reference sample and a last available reference sample — S12

decoding the current block using the prediction block — S14

End — S16

**Figure 8B**

S20

Start

S22

intra predicting a current block to obtain a prediction block, at least one sample of the prediction block is obtained by a linear combination of reference samples, one reference sample being padded, wherein a weight associated with the padded reference sample decreases as a function of a distance between the padded reference sample and a last available reference sample

S24

encoding the current block using the prediction block

S26

End

**Figure 8C**

Mode index, block size W, H, last reference indices IT, IL

S100

Marking the last available sample

S102

Determining A, nbP, nbPTh

S104    S106

nbP < nbPTh

no → Discarding mode

yes    S108

Mode is available

S110

Encoding/decoding block using the available modes

**Figure 9**

last reference indices IT, IL

**S200**

Marking the last available sample

**S202**

determined PDPC reference index y

**S204**

Horizontal prediction ?

yes — no

**S206** | **S212** | **S208** | **S216**

x <= IT ? — no → skip PDPC

y <= IL ? — no → skip PDPC

**S210** | **S214**

yes → Apply PDPC

yes → Apply PDPC

**S218**

Encoding/decoding block using the computed PDPC

**Figure 10**

Transition between conventional and inverse angle prediction

▨ Reference samples (one or more lines of pixels)

☐ Prediction block (computed from reference samples)

▨ Reference samples not available and thus padded

↙ Prediction direction (reference samples propagation)

↗ Prediction inverse direction (reference samples propagation)

**Figure 11**

Top reference

Figure 12

**Figure 13**

**Figure 14**

**Figure 15**

| | Europäisches Patentamt |
|---|---|
| | European Patent Office |
| | Office européen des brevets |

## EUROPEAN SEARCH REPORT

**Application Number**

EP 18 30 6384

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HEO (LGE) J ET AL: "CE3: Linear interpolation intra prediction (Tests 7.3.1, 7.3.2)", 11. JVET MEETING; 20180711 - 20180718; LJUBLJANA; (THE JOINT VIDEO EXPLORATION TEAM OF ISO/IEC JTC1/SC29/WG11 AND ITU-T SG.16 ), , no. JVET-K0090 2 July 2018 (2018-07-02), XP030198659, Retrieved from the Internet: URL:http://phenix.int-evry.fr/jvet/doc_end_user/documents/11_Ljubljana/wg11/JVET-K0090-v1.zip JVET-K0090.docx [retrieved on 2018-07-02] | 1,5-8, 12-16 | INV. H04N19/593 H04N19/105 H04N19/11 H04N19/167 H04N19/176 |
| A | * the whole document * | 2-4,9-11 | |
| X | FILIPPOV (HUAWEI) A ET AL: "CE3: Distance-weighted directional intra-prediction (Test 7.2.1)", 11. JVET MEETING; 20180711 - 20180718; LJUBLJANA; (THE JOINT VIDEO EXPLORATION TEAM OF ISO/IEC JTC1/SC29/WG11 AND ITU-T SG.16 ), , no. JVET-K0045 9 July 2018 (2018-07-09), XP030199117, Retrieved from the Internet: URL:http://phenix.int-evry.fr/jvet/doc_end_user/documents/11_Ljubljana/wg11/JVET-K0045-v2.zip JVET-K0045.docx [retrieved on 2018-07-09] | 1,2,8,9, 15,16 | **TECHNICAL FIELDS SEARCHED (IPC)**<br><br>H04N |
| A | * the whole document * | 3-7, 10-14 | |

-/--

The present search report has been drawn up for all claims

| Place of search | Date of completion of the search | Examiner |
|---|---|---|
| Munich | 22 February 2019 | Cyranka, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

Europäisches
Patentamt
European
Patent Office
Office européen
des brevets

## EUROPEAN SEARCH REPORT

Application Number

EP 18 30 6384

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YOO (LGE) S ET AL: "CE3-Related : Extended reference sample construction for longer interpolation filter in intra prediction", 12. JVET MEETING; 20181003 - 20181012; MACAO; (THE JOINT VIDEO EXPLORATION TEAM OF ISO/IEC JTC1/SC29/WG11 AND ITU-T SG.16 ), , no. JVET-L0291 3 October 2018 (2018-10-03), XP030194476, Retrieved from the Internet: URL:http://phenix.int-evry.fr/jvet/doc_end _user/documents/12_Macao/wg11/JVET-L0291-v 4.zip JVET-L0291_v3.docx [retrieved on 2018-10-03] | 1,4,8, 11,15,16 | |
| A | * the whole document * | 2,3,5-7, 9,10, 12-14 | |

-----

TECHNICAL FIELDS
SEARCHED      (IPC)

The present search report has been drawn up for all claims

| Place of search | Date of completion of the search | Examiner |
|---|---|---|
| Munich | 22 February 2019 | Cyranka, Oliver |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)